# EUROPÄISCHE PATENTSCHRIFT

(11) **EP 1 827 779 B1**
(45) Veröffentlichungstag und Bekanntmachung des Hinweises auf die Patenterteilung: **28.05.2008**
(21) Anmeldenummer: 05822871.9
(22) Anmeldetag: 02.12.2005
(51) Int. Cl.: B26D 7/26

(54) **VORRICHTUNG ZUM KLEMMEN EINES MESSERS BEI EINER SCHERE ZUM QUERTEILEN VON BÄNDERN**
DEVICE FOR CLAMPING A BLADE OF A PAIR OF SHEARS, USED IN THE TRANSVERSAL CUTTING OF STRIPS
DISPOSITIF POUR COINCER UNE LAME DANS UNE CISAILLE DESTINE A SEPARER DE MANIER TRANSVERSALE DES BANDES

(30) Priorität: 04.12.2004 DE 102004058491
(43) Veröffentlichungstag der Anmeldung: 05.09.2007
(73) Patentinhaber: SMS Demag Aktiengesellschaft, 40237 Düsseldorf (DE)
(72) Erfinder: MERZ, Jürgen, 57223 Kreuztal (DE); MÜNKER, Jochen, 57223 Kreuztal (DE)
(74) Vertreter: Klüppel, Walter
(86) Internationale Anmeldenummer: PCT/EP2005/012876
(87) Internationale Veröffentlichungsnummer: WO 2006/058759

(56) Entgegenhaltungen:
- EP-A- 0 468 458
- DE-A1- 1 653 094
- DE-A1- 2 405 000
- DE-A1- 3 423 275

## Beschreibung

Die Erfindung betrifft eine Vorrichtung zum Klemmen eines Messers bei einer Schere zum Querteilen von Bändern, insbesondere einer Schere zum Querteilen von Walzbändern, und / oder einer Schopfschere, bestehend aus Klemmkeil, Deckel, Druckfeder, Kolbenstange und Kolben.

Aus der DE 34 23 275 A1 ist eine Vorrichtung zur Einstellung des Messerspaltes an Trommelscheren bekannt, deren fest auf einem Tragwellenpaar mit schräg verzahnten Antriebszahnrädern sitzenden Messertrommel Längsausnehmungen für die Aufnahme von Messerbalken aufweisen. Die Messerbalken sind mittels eins Spannkeils, der über eine Zugstange unter der Wirkung eines Federpaketes steht, in der Längsausnehmung festklemmbar. Die Zugstange trägt an ihrem dem Spannkeil abgewandten Ende einen in einem Zylinderstück geführten Kolben, der über eine Zuleitung mit einem Druckmittel beaufschlagbar ist. Bei Beaufschlagung des Kolbens mit dem Druckmittel wird der Spannkeil entgegen der Wirkung des Federpaketes außer Spannlage gebracht und der Messerbalken kann in der Längsausdehnung gleiten.

Eine aus der DE 34 23 275 A1 Klemmvorrichtung ist im Detail in Fig. 1 dargestellt.

Zum Austauschen der Messerbalken werden die Spannkeile ebenfalls, wie oben beschrieben, gelöst. Der Messerbalken kann sowohl in einer Messertrommel wie auch in einer abgeänderten Form angeordnet sein. In der DE 199 53 908 A1 ist beispielsweise eine Messerträgerbrücke beschrieben, die nur einen Abschnitt einer Messertrommel darstellt.

Nachteilig bei den vorhandenen Klemmsystemen ist, dass der auf den Kolben wirkende Lösedruck die maximale Klemmkraft begrenzt, mit der das Messer festgeklemmt werden kann. Die Klemmkraft wiederum beeinflusst die zulässige Schnittkraft der Schere. D.h. je höher die Klemmkraft, desto höher ist auch die Schnittkraft der Schere.

Der Erfindung liegt daher die Aufgabe zugrunde, eine Vorrichtung der eingangs beschriebenen Art so auszubilden, dass die Kraft zum Lösen des Messers erhöht wird.

Diese Aufgabe wird erfindungsgemäß dadurch gelöst, dass bei einer Vorrichtung gemäß dem Oberbegriff von Anspruch 1 ein zweiter Kolben mit einer zweiten Druckfläche ausgebildet ist, wobei zwischen dem ersten Kolben und dem zweiten Kolben ein Kolbenstangenabschnitt ausgebildet ist,

Vorteilhafte Ausgestaltungen der Erfindung sind in den Unteransprüchen angegeben.

Durch die Vergrößerung der Druckfläche mittels eines zweiten Kolbens wird zusätzlich zur gesamten Druckfläche des hinteren Kolbens eine zusätzliche bzw. weitere Druckfläche in Form einer Ringfläche geschaffen. Beide Fläche werden durch das Druckmittel beaufschlagt und drücken die Druckfeder zusammen. Dadurch löst sich die Klemmleiste von dem Messer und gibt dieses frei. Durch das Zusammendrücken der Druckfeder kann, wie oben beschrieben, das Messer in der Längsausnehmung verschoben oder komplett entnommen werden, zum Austauschen oder Nachschleifen. Die Klemmleiste ist dabei mit der Kolbenstange verbunden. Hierzu geeignet ist neben einer Schraubverbindung auch eine Hammerkopfverbindung. Über die Länge der Messertrommel oder der Messerträgerbrücke sind mehrere der Klemmvorrichtungen verteilt.

Das Druckmittel zum Lösen der Klemmleiste wird den einzelnen Klemmvorrichtungen vorzugsweise über eine zentrale Versorgungsvorrichtung zugeleitet.

Daher können alle Klemmvorrichtungen für ein Messer gleichzeitig auf Kopfdruck gelöst werden.

Der entscheidende Vorteil der erfindungsgemäßen Vorrichtung liegt darin, dass die maximale Schnittkraft der Schere nicht mehr durch die Messerklemmkraft begrenzt ist. Daher können dickere und / oder breitere und / oder eine höhere Festigkeit aufweisende Bänder bei gleicher Scherengröße geschnitten werden.

Weiterhin verändern sich auf Grund der inneren Geometrie die Lasten auf benachbarte Bauteile. Beispielsweise wird der Deckel vom Klemmzylinder nur noch halb so hoch belastet.

Ein Ausführungsbeispiel der Erfindung wird anhand von sehr schematischen Zeichnungen naeher beschrieben. Es zeigen:
- Fig. 1: eine bekannte Klemmvorrichtung ( Stand der Technik ) und
- Fig. 2: eine Klemmvorrichtung gemäß der Erfindung.

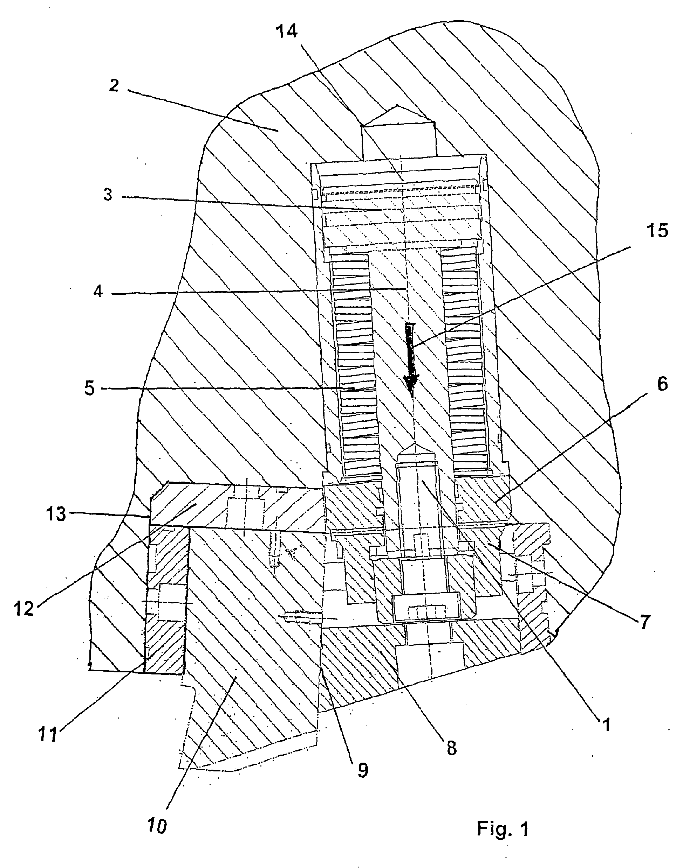

In der Figur 1 ist eine Klemmvorrichtung 1 in einer Messertrommel 2 dargestellt. Die Klemmvorrichtung 1 besteht aus einem Kolben 3, einer Kolbenstange 4, einer Druckfeder 5, einem Deckel 6 und einer Befestigungsvorrichtung 7 für eine Klemmleiste 8. Die Klemmleiste 8 drückt über eine schräge Fläche 9 ein Messer 10 gegen Anschlagsleisten 11 und 12, welche eine Längsausnehmung 13 zur Aufnahme des Messers 10 begrenzen. Zum Einsetzen oder Lösen des Messers 10 wird ein Druckmittel auf die hintere Kolbenfläche 14 des Kolbens 3 aufgebracht. Hierdurch wird der Kolben 3 mit der Kolbenstange 4 in Richtung des Pfeils 15 verschoben wobei gleichzeitig die Druckfeder 5, im vorliegenden Fall ein Tellerfederpaket, zusammengedrückt wird.

Die ebenfalls in Richtung des Pfeils 15 verschobene Klemmleiste 8 gibt das Messer 10 frei. Das Messer 10 kann nun entnommen oder verschoben werden.

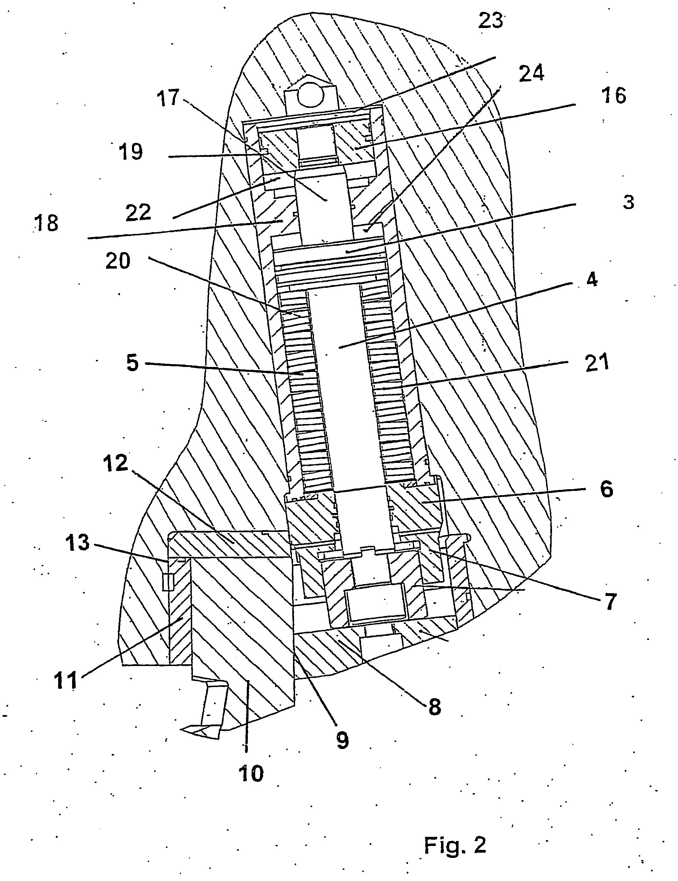

Die aus Figur 1 bekannte Vorrichtung wird gemäß Figur 2 derart verändert, dass ein zusätzlicher Kolben 16 mit Abstand zum bekannten Kolben 3 angeordnet ist.

Der Kolben 16 weist hierzu einen Kolbenstangenabschnitt 17 auf, welcher in einem Zylinderabschnitt 18 geführt wird. Die Kolben 3, 16 und der Kolbenstangenabschnitt 17 weisen Dichtungen 19 auf. Der Raum 20 zur Aufnahme eines Tellerfederpaketes 21 und der Ringraum 22 vor dem hinteren Kolben 16 weisen Umgebungsdruck auf, während der Raum 23 hinter dem hinteren Kolben 16 und der Ringraum 24 hinter dem vorderen Kolben 3 mit einem Druckmittel ( nicht dargestellt) beaufschlagt werden. Die beiden Räume 23 und 24 sind über Verbindungsbohrungen ( nicht dargestellt ) miteinander verbunden.

### Bezugszeichenliste

- 1.: Klemmvorrichtung
- 2.: Messertrommel
- 3.: Kolben
- 4.: Kolbenstange
- 5.: Druckfeder
- 6.: Deckel
- 7.: Befestigungsvorrichtung
- 8.: Klemmleiste
- 9.: schräge Fläche
- 10.: Messer
- 11.: Anschlagsleiste
- 12.: Anschlagsleiste
- 13.: Längenausnehmung
- 14.: hintere Kolbenfläche
- 15.: Pfeil
- 16.: Kolben
- 17.: Kolbenstangenabschnitt
- 18.: Zylinderabschnitt
- 19.: Dichtung
- 20.: Raum
- 21.: Tellerfederpaket
- 22.: Ringraum
- 23.: Raum
- 24.: Raum

## Patentansprüche

1. Vorrichtung zum Klemmen eines Messers (10) bei einer Schere zum Querteilen von Bändern, insbesondere einer Schere zum Querteilen von Walzbändern, und / oder einer Schopfschere, bestehend aus Kolben (3), Kolbenstange (4), Druckfeder (5), Deckel (6), Befestigungsvorrichtung (7) und Klemmleiste (8),
**dadurch gekennzeichnet,**
**dass** beabstandet zum ersten Kolben (3) ein zweiter Kolben (16) angeordnet ist, wobei zwischen dem ersten Kolben (3) und dem zweiten Kolben (16) ein Kolbenstangenabschnitt (17) ausgebildet ist.

2. Vorrichtung nach Anspruch 1,
**dadurch gekennzeichnet,**
**dass** der Durchmesser von der Kolbenstange (4) und von dem Kolbenstangenabschnitt (17) gleich ist.

3. Vorrichtung nach Anspruch 1,
**dadurch gekennzeichnet,**
**dass** der Durchmesser von der Kolbenstange (4) und von dem Kolbenstangenabschnitt (17) unterschiedlich ist.

4. Vorrichtung nach Anspruch 1,
**dadurch gekennzeichnet,**
**dass** der Durchmesser von dem ersten Kolben (3) und von dem zweiten Kolben (16) gleich ist.

5. Vorrichtung nach Anspruch 1,
**dadurch gekennzeichnet,**
**dass** der Durchmesser von dem ersten Kolben (3) und von dem zweiten Kolben (16) unterschiedlich ist.

6. Vorrichtung nach Anspruch 1,
**dadurch gekennzeichnet,**
**dass** die Kolben (3, 16) Dichtungen (19) aufweisen.

7. Vorrichtung nach Anspruch 1,
**dadurch gekennzeichnet,**
**dass** die Druckfeder (5) eine Spiralfeder ist.

8. Vorrichtung nach Anspruch 1,
**dadurch gekennzeichnet,**
**dass** die Druckfeder (5) ein Tellerfederpaket ist.

## Claims

1. Device for clamping a knife (10) in a cutter for cross-cutting strips, particularly a cutter for cross-cutting rolled strips, and/or a cropping cutter, consisting of piston (3), piston rod (4), compression spring (5), cover (6), fastening device (7) and clamping strip (8), **characterised in that** a second piston (16) is arranged at a spacing from the first piston (3), wherein a piston rod section (7) is formed between the first piston (3) and the second piston (16).

2. Device according to claim 1, **characterised in that** the diameter of the piston rod (4) and of the piston rod section (17) is equal.

3. Device according to claim 1, **characterised in that** the diameter of the piston rod (4) and the piston rod section (17) is different.

4. Device according to claim 1, **characterised in that** diameter of the first piston (3) and of the second piston (16) is the same.

5. Device according to claim 1, **characterised in that** the diameter of the first piston (3) and of the second piston (16) is different.

6. Device according to claim 1, **characterised in that** the pistons (3, 16) have seals (19).

7. Device according to claim 1, **characterised in that** the compression spring (5) is a helical spring.

8. Device according to claim 1, **characterised in that** the compression spring (5) is a plate spring packet.

## Revendications

1. Dispositif pour coincer une lame (10) dans une cisaille destinée à la séparation transversale de bandes, en particulier une cisaille pour la séparation transversale de bandes laminées, et/ou une cisaille à ébouter, constitué par un piston (3), une tige de piston (4), un ressort de compression (5), un couvercle (6), un dispositif de fixation (7) et une baguette de coincement (8),
**caractérisé en ce que**
à distance du premier piston (3) est agencé un second piston (16), un tronçon de tige de piston (17) étant réalisé entre le premier piston (3) et le second piston (16).

2. Dispositif selon la revendication 1,
**caractérisé en ce que**
le diamètre de la tige de piston (4) est le même que celui du tronçon de tige de piston (17).

3. Dispositif selon la revendication 1,
**caractérisé en ce que**
le diamètre de la tige de piston (4) est différent de celui du tronçon de tige de piston (17).

4. Dispositif selon la revendication 1,
**caractérisé en ce que**
le diamètre du premier piston (3) est le même que celui du second piston (16).

5. Dispositif selon la revendication 1,
**caractérisé en ce que**
le diamètre du premier piston (3) est différent de celui du second piston (16).

6. Dispositif selon la revendication 1,
**caractérisé en ce que**
les pistons (3, 16) présentent des joints d'étanchéité (19).

7. Dispositif selon la revendication 1,
**caractérisé en ce que**
le ressort de compression (5) est un ressort spiralé.

8. Dispositif selon la revendication 1,
**caractérisé en ce que**
le ressort de compression (5) est un empilement de ressorts Belleville.
